# FASCICULE DE BREVET EUROPEEN

(11) **EP 2 668 699 B1**
(45) Date de publication et mention de la délivrance du brevet: **21.03.2018**
(21) Numéro de dépôt: 12700705.2
(22) Date de dépôt: 23.01.2012
(51) Int. Cl.: H01Q 15/18, G02B 5/122

(54) **REFLECTEUR PASSIF D'ONDE ELECTROMAGNETIQUE POUR LA MESURE DE DEFORMATION LOCALE DE STRUCTURE A LA SURFACE DE LA TERRE**
PASSIVER REFLEKTOR FÜR ELEKTROMAGNETISCHE WELLEN ZUR MESSUNG EINER LOKALEN DEHNUNG IN EINER STRUKTUR AUF DER ERDOBERFLÄCHE
PASSIVE ELECTROMAGNETIC-WAVE REFLECTOR FOR MEASURING LOCAL STRAIN IN A STRUCTURE ON THE EARTH'S SURFACE

(30) Priorité: 25.01.2011 FR 1150564
(43) Date de publication de la demande: 04.12.2013
(73) Titulaire: Commissariat à l'Énergie Atomique et aux Énergies Alternatives, 75015 Paris (FR)
(72) Inventeur: LOREAUX, Philippe, F-94240 L'hay les Roses (FR); QUIN, Guillaume, F-78180 Montigny le Bretonneux (FR)
(74) Mandataire: Ilgart, Jean-Christophe
(86) Numéro de dépôt international: PCT/EP2012/050927
(87) Numéro de publication internationale: WO 2012/101072

(56) Documents cités:
- CA-A1- 2 425 073
- DE-A1- 3 119 180
- FR-A1- 2 948 188
- US-A1- 2003 107 519

## Description

### Domaine technique et art antérieur

La présente invention concerne un réflecteur passif d'onde électromagnétique pour la mesure de déformation locale d'une structure située à la surface de la Terre.

Les réflecteurs passifs d'onde électromagnétique, également appelés réflecteurs radar ou réflecteurs permanents (« permanent scatterers » en langue anglaise), sont utilisés pour la mesure de la déformation des sols et des objets placés à la surface de la Terre.

Une onde électromagnétique est envoyée, à partir d'un satellite, vers un réflecteur radar situé à la surface de la Terre. L'onde électromagnétique réfléchie par le réflecteur radar est alors renvoyée vers le satellite. La mesure de la déformation est effectuée, dans le sens de visée du satellite, en utilisant des images prises à des dates successives. La mesure de déformation peut atteindre une précision submillimétrique.

Quatre modes différents de visée du satellite sont utilisés pour mesurer les déformations. Les figures 1-4 représentent ces quatre modes :
- la figure 1 représente le mode ascendant avec visée à droite,
- la figure 2 représente le mode ascendant avec visée à gauche,
- la figure 3 représente le mode descendant avec visée à droite, et
- la figure 4 représente le mode descendant avec visée à gauche.

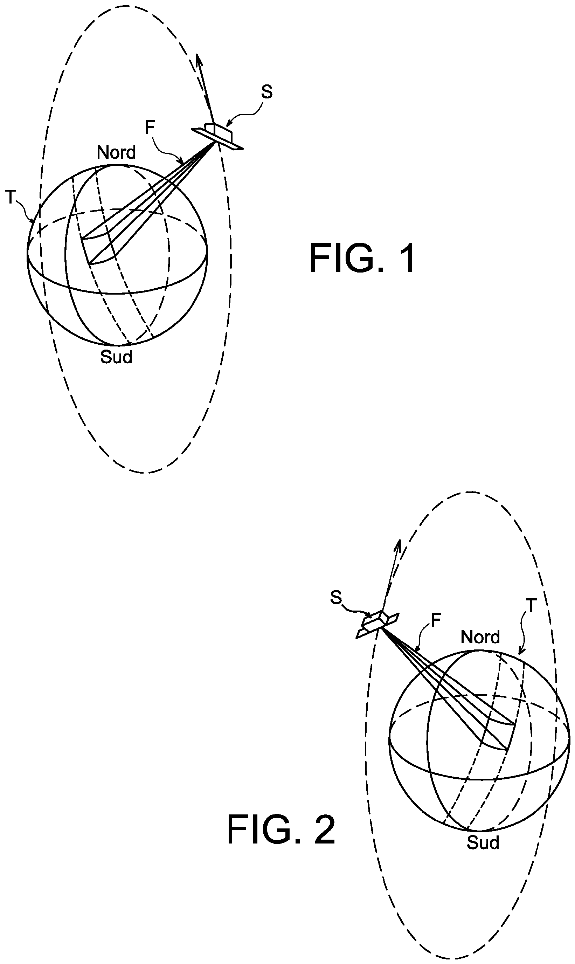

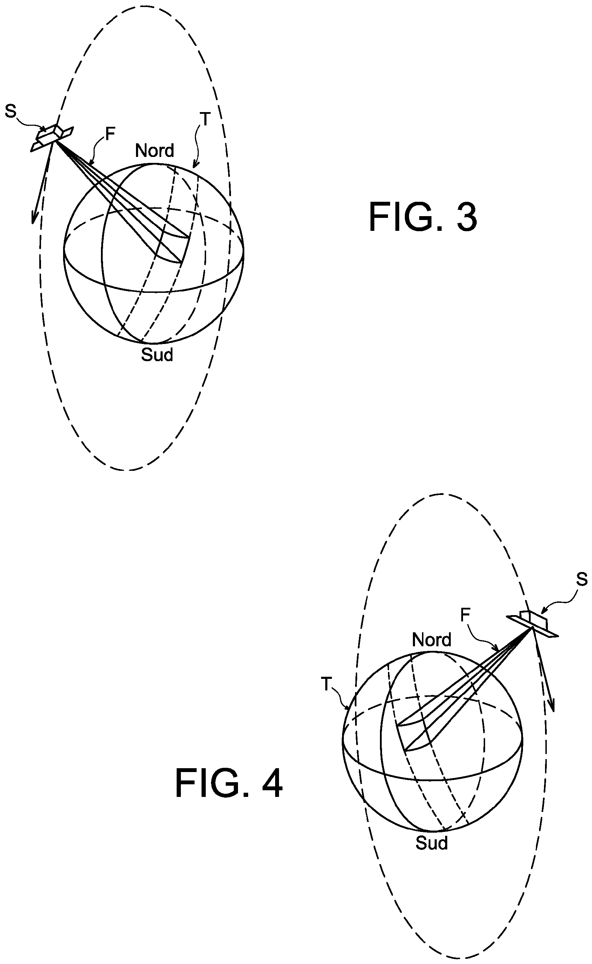

Comme cela apparaît sur les figures 1-4, le mode ascendant ou descendant se définit selon que la trajectoire du satellite S « monte » ou « descend » l'axe Nord-Sud de la Terre T et la visée à droite ou à gauche est définie par l'orientation du faisceau F qu'émet le satellite par rapport au plan défini par la trajectoire du satellite.

Les réflecteurs radar existent à l'état naturel ou à l'état artificiel. A l'état naturel, les réflecteurs radar se rencontrent le plus souvent dans les infrastructures humaines. Dans les régions dépourvues d'infrastructures humaines ou faiblement équipées de telles infrastructures, des réflecteurs radar à l'état artificiel sont tout particulièrement conçus pour la mesure des déformations.

Les réflecteurs radars les plus connus ont généralement une forme de coin de cube, le coin de cube étant positionné de manière adaptée à une prise de vue par satellite. A cette fin, la diagonale principale du coin de cube est, de préférence, dirigée vers le satellite. Cette orientation du coin de cube par rapport au satellite limite la prise d'images utiles, tant du fait de la trajectoire du satellite que du fait du mode de prise de vue du satellite. Ces réflecteurs sont ainsi dédiés à un satellite et à un mode de visée, ascendant ou descendant. Un tel réflecteur est, par exemple, connu du document FR-A-2 948 188. Le réflecteur radar de l'invention ne présente pas cet inconvénient.

### Exposé de l'invention

En effet, l'invention concerne un réflecteur passif d'onde électromagnétique pour la mesure de déformation locale d'une structure située à la surface de la Terre, le réflecteur étant apte à réfléchir, vers un satellite en orbite autour de la Terre, une onde électromagnétique qu'il reçoit en provenance dudit satellite. Le réflecteur passif comprend :
- un élément plan sensiblement vertical par rapport à la surface de la Terre, l'élément plan ayant un côté rectiligne en contact avec la structure située à la surface de la Terre et aligné selon l'axe des pôles de la Terre, et
- fixée à l'élément plan, une structure mécanique ayant une première partie située sur un premier côté de l'élément plan et une deuxième partie située sur un deuxième côté de l'élément plan, opposé au premier côté, la structure mécanique formant, de part et d'autre de l'élément plan, une arête rectiligne, l'arête rectiligne et le côté rectiligne étant sensiblement situés dans un même plan perpendiculaire au plan défini par l'élément plan et constituant des moyens de maintien du réflecteur sur la structure, la première partie de la structure mécanique et la deuxième partie de la structure mécanique étant apte, chacune, à réfléchir dans la direction du satellite l'onde électromagnétique qu'elle reçoit en provenance du satellite.

Contrairement aux réflecteurs radars passifs existants, le réflecteur radar passif de l'invention est avantageusement visible par tous les satellites, quel que soit le mode de prise de vue du satellite. Il permet de mesurer des déformations verticales et horizontales selon l'axe de visée du satellite.

### Brève description des figures

D'autres caractéristiques et avantages de l'invention apparaîtront à la lumière de modes de réalisation faits en référence aux figures jointes, parmi lesquelles :
- Les figures 1 à 4 déjà décrites représentent les quatre modes différents de visée d'un satellite qui sont utilisés pour mesurer des déformations ;

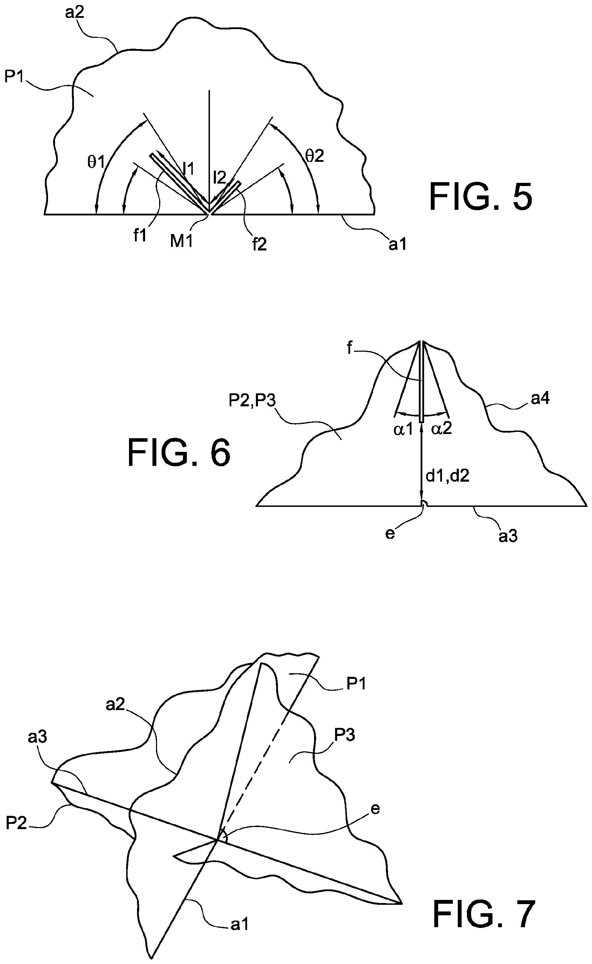

- Les figures 5-7 représentent des éléments constitutifs d'un réflecteur selon le mode de réalisation préférentiel de l'invention et le réflecteur obtenu par l'association de ces éléments constitutifs ;

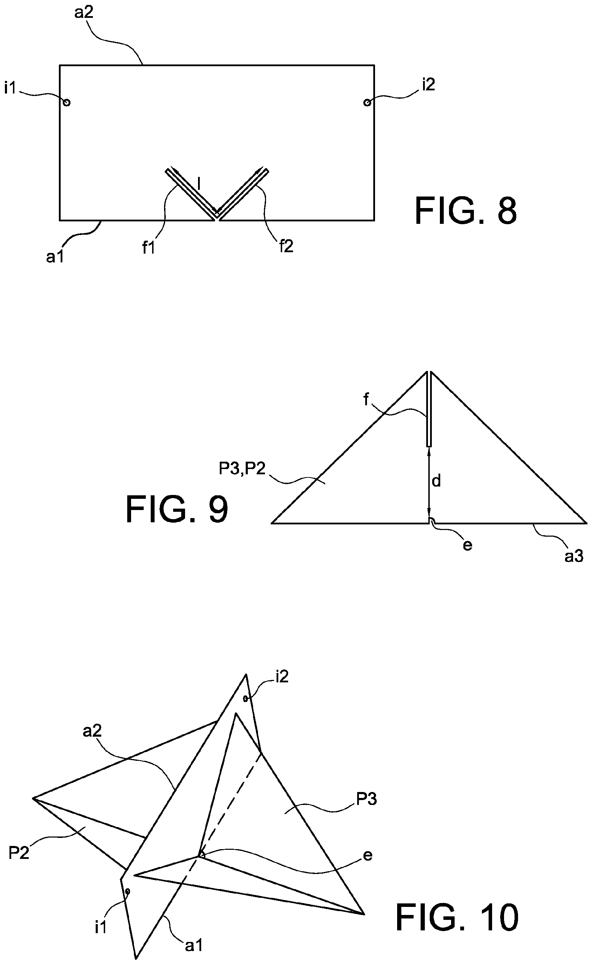

- Les figures 8-10 représentent une réalisation particulière du réflecteur selon le mode de réalisation préférentiel de l'invention.

### Exposé détaillé du mode de réalisation préférentiel de l'invention

Le réflecteur selon le mode de réalisation préférentiel de l'invention comprend trois éléments plans ou plaques P1, P2, P3. La figure 5 représente la plaque P1 et la figure 6 les plaques P2 et P3.

La plaque P1 a un côté rectiligne a1 et un côté a2 de forme quelconque qui délimite un secteur angulaire plat en regard du côté rectiligne a1. Deux ouvertures rectilignes en forme de fentes f1, f2 sont pratiquées dans la plaque P1 à partir d'un même point M situé sur le côté a1. De façon préférentielle, les fentes sont à 90° l'une de l'autre et font chacune un angle de 45° avec le côté a1. De façon plus générale cependant, les angles θ1, θ2 que font les fentes respectives f1, f2 avec le côté a1 se situe librement entre 35° et 55° (par « librement », il faut entendre que les fentes f1, f2 ne sont alors plus « liées » par un angle de 90° entre elles). La fente f1 a une longueur l1 et la fente f2 a une longueur l2.

La figure 6 représente les plaques P2 et P3. Chaque plaque P2, P3 a un côté rectiligne a3 et un côté a4 de forme quelconque qui délimite un secteur angulaire plat. Une ouverture rectiligne en forme de fente f est pratiquée dans chaque plaque P2, P3 à partir du côté a4. L'axe de la fente f est perpendiculaire au côté rectiligne a3. Pour la plaque P2, la distance dl qui sépare la fente f du côté rectiligne a3 est égale à la longueur 11 de la fente f1. De même, pour la plaque P3, la distance d2 qui sépare la fente f du côté rectiligne a3 est égale à la longueur l2 de la fente f2.

La figure 7 représente le réflecteur de l'invention qui résulte de l'assemblage des plaques P1, P2 et P3. Les plaques P1 et P2 sont imbriquées l'une dans l'autre, de même que les plaques P1 et P3. A cette fin, la fente f de la plaque P2 et la fente f1 de la plaque P1 sont positionnées l'une dans l'autre, jusqu'à leur extrémité, et alignées et la fente f de la plaque P3 et la fente f2 de la plaque P1 sont également positionnées l'une dans l'autre, jusqu'à leur extrémité, et alignées. Il résulte de cet assemblage que les deux côtés rectilignes a3 des plaques P2 et P3 sont au contact l'un de l'autre et définissent une arête qui constitue, en combinaison avec le côté a1, des moyens de maintien au sol du réflecteur. Le réflecteur de l'invention est ainsi avantageusement auto-porteur. Posé au sol, le réflecteur de l'invention ne nécessite ainsi aucune infrastructure particulière. Il suffit que l'emplacement au sol dont les déformations sont à surveiller dispose d'une surface équivalente à celle définie par les côtés a1, a3. Lorsque le réflecteur est posé au sol, la plaque P1 est sensiblement verticale. Afin que le réflecteur soit visible de tous les satellites, le côté a1 est aligné selon l'axe des pôles géographiques.

Une fois fixées à la plaque P1, les plaques P2 et P3 définissent une structure mécanique formant deux cavités situées de part et d'autre de la plaque P1, chaque cavité étant apte à réfléchir, dans la direction du satellite, l'onde électromagnétique qu'elle reçoit en provenance du satellite.

Selon un perfectionnement de l'invention, une encoche e est pratiquée sur l'arête a3 de chaque plaque P2, P3, sensiblement dans l'alignement de la fente f, de sorte que, une fois le réflecteur monté, un orifice apparaisse dans la partie basse de chaque cavité. Il est alors avantageusement possible, par exemple, d'évacuer les eaux de pluie.

Les figures 8 à 10 représentent une réalisation particulière du mode de réalisation préférentiel de l'invention.

Selon cette réalisation particulière, la plaque P1 est rectangulaire avec un grand côté et un petit côté, un des deux grands côtés formant le côté al, et les plaques P1 et P2 forment un triangle isocèle dont la base forme le côté a3. Les fentes f1 et f2 ont une même longueur 1. Elles sont positionnées à 90° l'une de l'autre et à 45° chacune par rapport au côté a1. La distance d qui sépare la fente f de la base du triangle est égale à la longueur 1 des fentes f1, f2.

Selon un perfectionnement, deux trous débouchants i1, i2 sont prévus sur la plaque P1 afin, si cela s'avère nécessaire, de pouvoir fixer au sol le réflecteur par des attaches. Selon un autre perfectionnement, le réflecteur comprend une structure transparente aux ondes électromagnétiques qui entoure les plaques P1, P2, P3 afin de protéger les plaques des agressions de l'environnement.

Le réflecteur de l'invention présente un grand nombre d'avantages, à savoir :
- il est passif et autonome et ne nécessite donc aucune source d'énergie électrique pour l'alimenter comme c'est le cas pour les récepteurs GPS (GPS pour « Global Positioning System »),
- il est sans entretien particulier et peut être mis en place pour un suivi sur plusieurs années,
- il est permanent et un cheminement sur chaque point de mesure, souvent difficile d'accès, n'est pas nécessaire comme c'est le cas des techniques topographiques avec visée optique ou antenne GPS,
- il est auto-porteur et, en conséquence, ne nécessite pas la construction de piliers spécifiques stables comme c'est le cas pour les techniques topographiques ou GPS,
- il peut être utilisé dans des contextes de suivi de masses meubles telles que la neige, la glace ou les sols mous,
- il est facilement transportable, ce qui permet son implantation dans des endroits isolés à accès difficile,
- il est peu coûteux, ce qui permet de mettre en place un grand nombre de dispositifs dans une même zone, permettant ainsi de faire un grand nombre de mesures dans cette zone,
- il est visible de tout type de satellite, quelle que soit la fréquence de celui-ci, permettant ainsi :
   a) de réaliser des mesures de déformation très précises (une précision submillimétrique peut être obtenue avec des satellites qui travaillent en bande X (8-12 GHz)) et,
   b) de travailler avec une récurrence importante, ce qui est avantageux dans le cas d'une déformation évoluant rapidement (dans ce cas, toutes les images d'une même zone qui sont acquises par les différents satellites sont analysées avec la même référence au sol),
- il est rustique et, de ce fait, il ne fait pas l'objet d'une curiosité pouvant conduire à des actes malveillants de la part de promeneurs (dégradations ou vol).

L'invention trouve des applications dans de nombreux domaines tels que, par exemple, le génie civil et les sciences de la Terre.

Les applications en génie civil sont, par exemple :
- le suivi d'ouvrages tels que barrages, ponts, bâtiments, digues, îles artificielles, remblais de route, voies de chemin de fer, etc.,
- le suivi de stabilité des falaises côtières, des ligne de côtes, des fondrières,
- l'évolution en surface d'anciens sites miniers.

Les applications en sciences de la Terre sont, par exemple :
- la mesure des déformations avant et après par un séisme,
- le suivi de la déformation des volcans, de la subsidence continentale ou tectonique, de l'évolution des failles et des glissements de terrain,
- le suivi de l'avancement des glaciers et de l'évolution des névés sur les massifs à enneigement permanent,
- la formation d'un point de référence de stabilité terrestre pour le calcul du zéro hydro dans les ports,
- l'étude des fonds marins en posant le réflecteur radar sur les fonds marins (transposition de la technique d'imagerie radar par satellite).

## Revendications

1. Réflecteur passif d'onde électromagnétique pour la mesure de déformation locale d'une structure située à la surface de la Terre, le réflecteur étant apte à réfléchir, vers un satellite en orbite autour de la Terre, une onde électromagnétique qu'il reçoit en provenance dudit satellite, **caractérisé en ce qu'**il comprend :
- une plaque (P1) ayant un côté rectiligne (a1) apte à être mis en contact avec la structure, et
- fixée à ladite plaque (P1), une structure mécanique (P2, P3) constituée d'une première plaque (P2) et d'une deuxième plaque (P3) insérées dans ladite plaque et ayant, chacune, un côté rectiligne (a3) réparti de part et d'autre de ladite plaque, le côté rectiligne de la première plaque étant au contact du côté rectiligne de la deuxième plaque pour former une arête rectiligne (a3) de la structure mécanique répartie de part et d'autre de ladite plaque, la première plaque (P2), la deuxième plaque (P3) et ladite plaque (P1) formant, de part et d'autre de ladite plaque, une cavité apte à réfléchir, dans la direction du satellite, l'onde électromagnétique qu'elle reçoit en provenance du satellite, l'arête rectiligne (a3, a3) de la structure mécanique et le côté rectiligne (a1) de ladite plaque étant situés dans un même plan perpendiculaire à un plan défini par ladite plaque et constituant, en combinaison, des moyens de maintien du réflecteur sur la structure.

2. Réflecteur selon la revendication 1, dans lequel ladite plaque (P1) comprend deux ouvertures rectilignes en forme de fente (f1, f2) pratiquées, à partir d'un même point (M1) situé sur le côté rectiligne (a1) de ladite plaque, de part et d'autre d'un axe perpendiculaire au côté rectiligne de ladite plaque, chaque fente étant alignée selon un axe faisant un angle compris entre 35° et 55° par rapport audit axe perpendiculaire, une première fente (f1) ayant une première longueur (11) et une deuxième fente (f2) ayant une deuxième longueur (12), la première plaque (P2) comprenant un côté qui délimite un secteur angulaire plat en regard du côté rectiligne de la première plaque et la deuxième plaque (P3) comprenant un côté qui délimite un secteur angulaire plat en regard du côté rectiligne de la deuxième plaque, une ouverture rectiligne en forme de fente (f) étant pratiquée, dans chaque première et deuxième plaque (P2, P3), à partir du côté qui délimite le secteur angulaire plat, l'axe de chaque fente (f) pratiquée dans chaque première et deuxième plaque étant perpendiculaire au côté rectiligne de ladite plaque, la distance qui sépare la fente pratiquée dans la première plaque du côté rectiligne de la première plaque étant égale à longueur de la première fente pratiquée dans ladite plaque et la distance qui sépare la fente pratiquée dans la deuxième plaque du côté rectiligne de la deuxième plaque étant égale à longueur de la deuxième fente pratiquée dans ladite plaque , la fente pratiquée dans la première plaque étant positionnée jusqu'à son extrémité dans la première fente de ladite plaque et alignée avec ladite première fente et la fente pratiquée dans la deuxième plaque étant positionnée jusqu'à son extrémité dans la deuxième fente de ladite plaque et alignée avec ladite deuxième fente.

3. Réflecteur selon la revendication 2, dans lequel l'axe de la première fente (f1) et l'axe de la deuxième fente (f2) font, chacun, un angle de 45° avec l'axe perpendiculaire au côté rectiligne de ladite plaque et les longueurs (l1, l2) des première et deuxième fentes sont sensiblement égales.

4. Réflecteur selon l'une quelconque des revendications 2 ou 3, dans lequel une encoche (e) est pratiquée sur le côté rectiligne de chaque première et deuxième plaque, sensiblement dans l'alignement de l'axe de la fente (f) pratiquée dans chaque première et deuxième plaque.

5. Réflecteur selon l'une quelconque des revendications précédentes, dans lequel des trous débouchants (i1, i2) sont prévus dans ladite plaque (P1) afin de permettre une fixation du réflecteur sur la structure.

## Patentansprüche

1. Passiver Reflektor für elektromagnetische Wellen zum Messen einer örtlichen Verformung einer auf der Erdoberfläche befindlichen Struktur, wobei der Reflektor dazu geeignet ist, zu einem die Erde umkreisenden Satelliten eine elektromagnetische Welle zu reflektieren, die er vom Satelliten kommend empfängt, **dadurch gekennzeichnet, dass** er enthält:
- eine Platte (P1) mit einer geradlinigen Seite (a1), die mit der Struktur in Kontakt gebracht werden kann, und
- an die Platte (P1) befestigt eine mechanische Struktur (P2, P3), die aus einer ersten Platte (P2) und einer zweiten Platte (P3) besteht, die in die eine Platte eingefügt sind und jeweils eine geradlinige Seite (a3) haben, die beiderseits der einen Platte verteilt ist, wobei die geradlinige Seite der ersten Platte mit der geradlinigen Seite der zweiten Platte in Kontakt ist, um eine geradlinige Kante (a3) der beiderseits der einen Platte verteilten mechanischen Struktur zu bilden, wobei die erste Platte (P2), die zweite Platte (P3) und die eine Platte (P1) beiderseits der einen Platte eine Vertiefung bilden, die dazu geeignet ist, in Richtung des Satelliten die elektromagnetische Welle zu reflektieren, die sie vom Satelliten kommend empfängt, wobei die geradlinige Kante (a3, a3) der mechanischen Struktur und die geradlinige Seite (a1) der einen Platte in einer gleichen Ebene senkrecht zu einer Ebene liegen, welche die eine Platte aufspannt, und in Kombination Einrichtungen zum Halten des Reflektors an der Struktur bilden.

2. Reflektor nach Anspruch 1, wobei die eine Platte (P1) zwei geradlinige, schlitzförmige Öffnungen (f1, f2) aufweist, die ausgehend von einem gleichen, auf der geradlinigen Seite (a1) der einen Platte befindlichen Punkt (M1) beiderseits einer senkrecht zur geradlinigen Seite der einen Platte verlaufenden Achse ausgeführt sind, wobei jeder Schlitz in einer Achse ausgerichtet ist, welche einen Winkel zwischen 35° und 55° bezüglich der senkrechten Achse einschließt, wobei ein erster Schlitz (f1) eine erste Länge (11) und ein zweiter Schlitz (f2) eine zweite Länge (l2) hat, wobei die erste Platte (P2) eine Seite aufweist, welche einen flachen Winkelsektor gegenüber der geradlinigen Seite der ersten Platte eingrenzt, und die zweite Platte (P3) eine Seite aufweist, welche einen flachen Winkelsektor gegenüber der geradlinigen Seite der zweiten Platte eingrenzt, wobei eine geradlinige, schlitzförmige Öffnung (f) in jeder ersten und zweiten Platte (P2, P3) ausgehend von der Seite ausgeführt ist, welche den flachen Winkelsektor eingrenzt, wobei die Achse von jedem Schlitz (f), der in jeder aus erster und zweiter Platte ausgeführt ist, senkrecht zur geradlinigen Seite der einen Platte ausgeführt ist, wobei der Abstand, welcher den in der ersten Platte ausgeführten Schlitz von der geradlinigen Seite der ersten Platte trennt, gleich der Länge des ersten Schlitzes ist, der in der einen Platte ausgeführt ist, und der Abstand, welcher den in der zweiten Platte ausgeführten Schlitz von der geradlinigen Seite der zweiten Platte trennt, gleich der Länge des zweiten Schlitzes ist, der in der einen Platte ausgeführt ist, wobei der in der ersten Platte ausgeführte Schlitz bis zu seinem Ende in dem ersten Schlitz der einen Platte positioniert ist und mit dem ersten Schlitz fluchtet, und der in der zweiten Platte ausgeführte Schlitz bis zu seinem Ende in dem zweiten Schlitz der einen Platte positioniert ist und mit dem zweiten Schlitz fluchtet.

3. Reflektor nach Anspruch 2, wobei die Achse des ersten Schlitzes (f1) und die Achse des zweiten Schlitzes (f2) jeweils einen Winkel von 45° mit der senkrecht zur geradlinigen Seite der einen Platte verlaufenden Achse einschließen und die Längen (l1, l2) des ersten und des zweiten Schlitzes im Wesentlichen gleich sind.

4. Reflektor nach einem der Ansprüche 2 oder 3, wobei eine Einkerbung (e) auf der geradlinigen Seite einer jeden aus erster und zweiter Platte im Wesentlichen in der Flucht der Achse des in jeder aus erster und zweiter Platte ausgeführten Schlitzes (f) eingebracht ist.

5. Reflektor nach einem der vorangehenden Ansprüche, wobei durchgehende Lochungen (i1, i2) in der einen Platte (P1) vorgesehen sind, um eine Befestigung des Reflektors an die Struktur zu gestatten.

## Claims

1. Passive electromagnetic wave reflector for measuring local strain in a structure located on the Earth's surface, the reflector being able to reflect, to a satellite in orbit around the Earth, an electromagnetic wave that it receives from said satellite, **characterised in that** it comprises:
- a plate (P1) having a rectilinear side (a1) able to make contact with the structure, and
- fixed to said plate (P1), a mechanical structure (P2, P3) having a first plate (P2) and a second plate (P3) inserted in said plate and having, each, a rectilinear side (a3) spread on either side of said plate, the rectilinear side of the first plate being in contact with the rectilinear side of the second plate to form a rectilinear edge (a3) of the mechanical structure spread on either side of said plate, the first plate (P2), the second plate (P3) and said plate (P1) forming, on either side of said plate, a cavity able to reflect, in the direction of the satellite, the electromagnetic wave that it receives from the satellite, the rectilinear edge (a3, a3) of the mechanical structure and the rectilinear side (a1) of said plate being located in a same plane perpendicular to a plane defined by said plate and forming, in combination, means for holding the reflector on the structure.

2. Reflector according to claim 1, wherein said plate (P1) comprises two rectilinear openings in the form of slit (f1, f2) made, from a same point (M1) located on the rectilinear side (a1) of said plate, on either side of an axis perpendicular to the rectilinear side of said plate, each slit being aligned along an axis forming an angle comprised between 35° and 55° in relation to said perpendicular axis, a first slit (f1) having a first length (l1) and a second slit (f2) having a second length (l2), the first plate (P2) comprising a side which delimits a flat angular sector opposite the rectilinear side of the first plate and the second plate (P3) comprising a side which delimits a flat angular sector opposite the rectilinear side of the second plate, a rectilinear opening in the form of slit (f) being made, in each first and second plate (P2, P3), from the side which delimits the flat angular sector, the axis of each slit (f) made in each first and second plate being perpendicular to the rectilinear side of said plate, the distance that separates the slit made in the first plate of the rectilinear side of the first plate being equal to the length of the first slit made in said plate and the distance that separates the slit made in the second plate of the rectilinear side of the second plate being equal to the length of the second slit made in said plate, the slit made in the first plate being positioned up to its end in the first slit of said plate and aligned with said first slit and the slit made in the second plate being positioned up to its end in the second slit of said plate and aligned with said second slit.

3. Reflector according to claim 2, wherein the axis of the first slit (f1) and the axis of the second slit (f2) form, each, an angle of 45° with the axis perpendicular to the rectilinear side of said plate and the lengths (l1, l2) of the first and second slits are substantially equal.

4. Reflector according to any one of claims 2 or 3, wherein a notch (e) is made on the rectilinear side of each first and second plate, substantially in the alignment of the axis of the slit (f) made in each first and second plate.

5. Reflector according to any one of the preceding claims, wherein through holes (i1, i2) are provided in said plate (P1) in order to enable a fixation of the reflector on the structure.
